# EUROPÄISCHE PATENTSCHRIFT

(11) **EP 3 698 424 B1**
(45) Veröffentlichungstag und Bekanntmachung des Hinweises auf die Patenterteilung: **03.01.2024**
(21) Anmeldenummer: 18789063.7
(22) Anmeldetag: 15.10.2018
(51) Int. Cl.: H01M 8/04291, H01M 8/04119

(54) **FEUCHTIGKEITSTAUSCHMODUL FÜR EIN BRENNSTOFFZELLENSYSTEM, BRENNSTOFFZELLENSYSTEM**
MOISTURE EXCHANGE MODULE FOR A FUEL CELL SYSTEM, AND FUEL CELL SYSTEM
MODULE D'ÉCHANGE D'HUMIDITÉ POUR UN SYSTÈME DE PILES À COMBUSTIBLE, SYSTÈME DE PILES À COMBUSTIBLE

(30) Priorität: 17.10.2017 DE 102017218502
(43) Veröffentlichungstag der Anmeldung: 26.08.2020
(73) Patentinhaber: Volkswagen Aktiengesellschaft, 38440 Wolfsburg (DE)
(72) Erfinder: SCHILLER, Heino, 38122 Braunschweig (DE); KAMMEL, Julia, 38162 Cremlingen (DE); BORM, Florian, 38315 Hornburg (DE); DAMERT, Viktor, 31319 Sehnde (DE); BENEKE, Burkhard, 38122 Braunschweig (DE)
(74) Vertreter: Clarenbach, Carl-Philipp
(86) Internationale Anmeldenummer: PCT/EP2018/078033
(87) Internationale Veröffentlichungsnummer: WO 2019/076797

(56) Entgegenhaltungen:
- EP-A1- 1 853 373
- EP-A1- 2 827 074
- US-A1- 2016 036 073

## Beschreibung

Die Erfindung betrifft ein Feuchtigkeitstauschmodul für ein Brennstoffzellensystem, mit einem Gehäuse, das zumindest eine erste Einlassöffnung und eine erste Auslassöffnung für einen ersten Gasstrom, insbesondere Abgasstrom des Brennstoffzellensystems, und zumindest eine zweite Einlassöffnung und eine zweite Auslassöffnung für einen zweiten Gasstrom, insbesondere Frischluftstrom, aufweist, wobei in dem Gehäuse eine zylinderförmige Hohlfasermembran angeordnet ist, welcher die erste Einlassöffnung und die zweite Auslassöffnung derart zugeordnet sind, dass die Hohlfasermembran von dem ersten Gasstrom axial durchströmbar ist, und wobei die zweite Einlassöffnung und die zweite Auslassöffnung derart angeordnet sind, dass der zweite Gasstrom den ersten Gasstrom radial kreuzt.

Weiterhin betrifft die Erfindung ein Brennstoffzellensystem, insbesondere für ein Kraftfahrzeug, mit einer oder mehreren Brennstoffzellen und mit einem Befeuchtungssystem für eine Membran der jeweiligen Brennstoffzelle, wobei das Befeuchtungssystem ein Feuchtigkeitstauschmodul aufweist, durch welches als erster Gasstrom ein Abgas des Brennstoffzellensystems und als zweiter Gasstrom Frischluft geführt werden beziehungsweise führbar sind, um die Frischluft durch Feuchtigkeit des Abgases zu befeuchten und der Membran zuzuführen.

Feuchtigkeitstauschmodule und Brennstoffzellensysteme der eingangs genannten Art sind aus dem Stand der Technik bereits bekannt. So offenbart beispielsweise die Patentschrift DE 10 2004 022 021 B4 ein Brennstoffzellensystem mit einem derartigen Feuchtigkeitstauschmodul. Dieses weist ein zylinderförmiges Gehäuse auf, in welchem eine zylinderförmige Hohlfasermembran koaxial zum Gehäuse angeordnet ist. Die Hohlfasermembran wird von dem Abgas einer oder mehrerer Brennstoffzellen axial durchströmt, sodass eine erste Einlassöffnung und eine erste Auslassöffnung für das Abgas stirnseitig an dem Gehäuse beziehungsweise der Hohlfasermembran ausgebildet sind. Ein Frischluftstrom wird derart dem Gehäuse zugeführt, dass er den Abgasstrom kreuzt. Dazu sind eine zweite Einlassöffnung und eine zweite Auslassöffnung an der Mantelwand des Zylinders ausgebildet, sodass der Frischluftstrom radial beziehungsweise senkrecht zum Abgasstrom durch das Gehäuse strömt. Dabei durchdringt der Frischluftstrom die Hohlfasermembran radial, wobei der Frischluftstrom Feuchtigkeit aus dem Abgas durch die für Wasser durchlässige Hohlfasermembran aufnimmt und durch die zweite Auslassöffnung als befeuchteter Luftstrom austritt und der Membran zum Befeuchten dieser zugeführt wird.

Aus der Offenlegungsschrift US 6,656,620 B2 ist ebenfalls ein Feuchtigkeitstauschmodul für Brennstoffzellensysteme bekannt.

Weiterhin ist aus der Offenlegungsschrift US 2016/036073 A1 ein Brennstoffzellensystem mit einem Feuchtigkeitstauschmodul für den Feuchtigkeitstausch zwischen Abgas einer Brennstoffzelle und Frischluft bekannt, das die Merkmale des Oberbegriffs des Anspruchs 1 aufweist.

Der Erfindung liegt die Aufgabe zugrunde, ein verbessertes Feuchtigkeitstauschmodul zu schaffen, das eine verbesserte Befeuchtung der Frischluft gewährleistet.

Die der Erfindung zugrunde liegende Aufgabe wird durch ein Feuchtigkeitstauschmodul mit den Merkmalen des Anspruchs 1 gelöst. Dieses zeichnet sich dadurch aus, dass koaxial zu und innerhalb der Hohlfasermembran ein Bypasskanal für den zweiten Gasstrom beziehungsweise für einen Anteil des zweiten Gasstroms verläuft, sodass auch der den ersten Gasstrom radial kreuzende zweite Gasstrom oder Anteil des zweiten Gasstroms in den Bypasskanal gelangt. Hierdurch wird einerseits erreicht, dass in dem Bypasskanal eine Vermischung von dem Anteil des zweiten Gasstroms, der dem Bypasskanal zugeführt wird, und dem Anteil des zweiten Gasstroms, der den ersten Gasstrom radial kreuzt, erfolgt und der zweite Gaststrom unabhängig von seinem Einströmweg in das Feuchtigkeitstauschmodul das Feuchtigkeitstauschmodul durch die zweite Auslassöffnung verlässt. Andererseits ist der zweite Gasstrom auch vollständig durch den Bypasskanal leitbar, womit er an dem ersten Gasstrom vorbei durch die Hohlfasermembran strömen kann. Dadurch umgeht der zweite Gasstrom die Feuchtigkeitsaufnahme beim Kreuzen des ersten Gasstroms und erlaubt eine Druckentlastung in dem Feuchtigkeitstauschmodul, insbesondere im Strömungsweg des ersten Gasstroms. Hierdurch wird die Druckfestigkeit des Feuchtigkeitstauschmoduls erhöht. Der zweite Gasstrom kann somit vollständig durch den Bypasskanal einerseits oder anteilig durch den Bypasskanal und anteilig radial durch die Hohlfasermembran andererseits geführt werden. Im letzteren Fall mischt sich in dem Bypasskanal der den ersten Gasstrom kreuzende und damit durch den ersten Gasstrom befeuchtete Anteil des zweiten Gasstroms mit dem direkt dem Bypasskanal zugeführten Anteil des zweiten Gasstroms, sodass ein insgesamt befeuchteter zweiter Gasstrom in dem Bypasskanal entsteht und das Feuchtigkeitstauschmodul durch die zweite Auslassöffnung verlässt, sodass er an der Brennstoffzelle oder dem Brennstoffzellensystem zur Verfügung gestellt wird.

Weiterhin ist bevorzugt vorgesehen, dass der Bypasskanal eine dritte Einlassöffnung für den zweiten Gasstrom und die zweite Auslassöffnung an jeweils einem seiner axialen Stirnenden bildet. Damit strömt der zweite Gasstrom, wenn er dem Bypasskanal zugeführt wird, axial in den Bypasskanal hinein und auch axial aus diesem wieder heraus. Dadurch ergeben sich in dem Bypasskanal vorteilhafte Strömungseigenschaften, welche eine vorteilhafte Mischung des dem Bypasskanal zugeführten Anteils mit dem die Hohlfasermembran radial durchquerenden Anteil gewährleistet. Dabei sind hohe Strömungsgeschwindigkeiten mit geringen Strömungsverlusten sowie konstruktiv einfache Anschlussmöglichkeiten für die Gasstrom-Zuleitungs- und Ableitungswege gewährleistet.

Gemäß einer bevorzugten Ausführungsform der Erfindung ist außerdem vorgesehen, dass sich die zweite Einlassöffnung zumindest im Wesentlichen über die axiale Länge der Hohlfasermembran erstreckt. Damit wird gewährleistet, dass der zweite Gasstrom großflächig durch die Hohlfasermembran hindurch strömt und dadurch eine maximale Befeuchtung des zweiten Gasstroms ermöglicht.

Gemäß einer alternativen Ausführungsform der Erfindung ist bevorzugt vorgesehen, dass über den Umfang und/oder die Längserstreckung der Hohlfasermembran verteilt mehrere zweite Einlassöffnungen oder mehrere Teilöffnungen der Einlassöffnung angeordnet sind. Dadurch wird der zweite Gasstrom an mehreren Stellen radial der Hohlfasermembran zugeführt, sodass das Feuchtigkeitstauschmodul hocheffizient und mit geringem Staudruck arbeitet, insbesondere auch dann, wenn der zweite Gasstrom vollständig der Hohlfasermembran zugeführt wird. Durch die großflächige Verteilung des zweiten Gasstroms auf die Hohlfasermembran ist ein gleichmäßiges radiales durchströmen der Hohlfasermembran von mehreren Seiten oder mehreren Stellen gewährleistet, wodurch der Staudruck gering gehalten beziehungsweise reduziert wird.

Weiterhin ist bevorzugt vorgesehen, dass der zweiten Einlassöffnung beziehungsweise den mehreren Einlassöffnungen oder Teilöffnungen ein Einlasskanal zugeordnet ist, der sich zumindest abschnittsweise axial erstreckt. Damit strömt der zweite Gasstrom zumindest abschnittsweise parallel zu dem ersten Gasstrom, wodurch beispielsweise bereits ein Wärmeaustausch zwischen den beiden Gasströmen stattfinden kann. Es ergibt sich dadurch außerdem eine strömungsgünstige Führung des zweiten Gasstroms und eine vorteilhafte Gasstromvermischung in dem Bypasskanal.

Erfindungsgemäß ist außerdem vorgesehen, dass die Hohlfasermembran von einem Hohlzylinder getragen wird, der mehrere Durchgangsöffnungen in seiner Mantelfläche aufweist, und den Bypasskanal zumindest abschnittsweise bildet. Der Hohlzylinder bildet somit zumindest abschnittsweise, insbesondere vollständig, den durch die Hohlfasermembran führenden Bypasskanal. Gleichzeitig stellt der

Hohlzylinder ein Trag- beziehungsweise Stützelement für die Hohlfasermembran dar, welches die Montage erleichtert und dauerhaft einen sicheren Betrieb des Feuchtigkeitstauschmoduls gewährleistet. Durch den Hohlzylinder wird außerdem erreicht, dass der durch den Bypasskanal strömende zweite Gasstrom oder Anteil des zweiten Gasstroms nicht ohne weiteres in die Hohlfasermembran gelangt. Vorzugsweise sind dazu die Durchgangsöffnungen in dem Hohlzylinder derart ausgebildet, dass sie eine Vorzugsströmungsrichtung für den aus der Hohlfasermembran austretenden zweiten Gasstrom oder Gasstromanteil aufweisen, wozu sie insbesondere derart schräg den Gasstrom von der Hohlfasermembran in den Bypasskanal leiten, dass der Gasstrom in Richtung des Bypasskanals und insbesondere in Richtung der zweiten Auslassöffnung des Bypasskanals leiten. Allein durch die mehreren Durchgangsöffnungen in der Mantelfläche des Hohlzylinders ist der Austausch der Gase durch die zweite Hohlfasermembran hindurch möglich. Weil der zweite Gasstrom außerdem auch durch die zweite Einlassöffnung und die Hohlfasermembran strömt, ist sichergestellt, dass der befeuchtete zweite Gasstrom in das Innere des Hohlzylinders gelangt und sich dort mit dem gegebenenfalls durch den Bypasskanal strömenden zweiten Gasstrom vorteilhaft vermischt und durch die zweite Auslassöffnung abgeführt wird. Der Hohlzylinder hat außerdem den Vorteil, dass die Hohlfasermembran in einer gewünschten Ausrichtung und Anordnung innerhalb des Gehäuses, angeordnet und gehalten ist, sodass ein Verschieben oder Verkippen der Hohlfasermembranen zu dem Gehäuse, auch bei erhöhten Strömungsgeschwindigkeiten der Gasströme, sicher verhindert ist. Bevorzugt ist der Hohlzylinder mechanisch mit dem Gehäuse des Feuchtigkeitstauschmoduls, das insbesondere hohlzylinderförmig ausgebildet ist, verbunden, wobei insbesondere das Gehäuse zumindest die zweite Einlassöffnung und optional auch den Einlasskanal aufweist.

Vorzugsweise ist dem Bypasskanal und/oder dem Einlasskanal jeweils ein betätigbares Ventil zum Einstellen eines jeweiligen Volumenstroms zugeordnet. Mittels des jeweiligen Ventils ist somit der durch den Bypasskanal und/oder Einlasskanal strömende zweite Gasstrombeziehungsweise Anteil des zweiten Gasstroms einstellbar oder regulierbar, sodass insbesondere vorteilhafte Druckverhältnisse in dem Feuchtigkeitstauschmodul einstellbar sind, die einen sicheren Betrieb und insbesondere ein sicheres Befeuchten des zweiten Gasstroms durch den ersten Gasstrom sicherstellen. So ist beispielsweise im Normalfall der Bypasskanal durch das ihm zugeordnete Ventil geschlossen, und wird nur dann freigegeben, wenn ein kritischer Druck in dem Einlasskanal und/oder zwischen den beiden Hohlfasermembranen entsteht. Oder der Bypasskanal ist beispielsweise im Normalfall teilweise geöffnet, sodass ein kleinerer Anteil des zweiten Gasstroms durch den Bypasskanal geführt wird, sodass ein sicherer Abtransport des durch die Hohlfasermembran geführten Anteils des zweiten Gasstroms sicher erfolgt, und dass bei Bedarf, beispielsweise dann, wenn der kritische Druckbeziehungsweise Staudruck erreicht wird, der dem Bypasskanal zugeführte Anteil des zweiten Gasstroms erhöht wird, um das Überschreiten des Staudrucks oder des kritischen Drucks zu vermeiden.

Weiterhin ist bevorzugt vorgesehen, dass von dem Einlasskanal der Bypasskanal abzweigt. Damit wird der zweite Gasstrom zunächst durch einen gemeinsamen Zuführkanal dem Feuchtigkeitstauschmodul zugeführt, und in Einlasskanal und Bypasskanal aufgeteilt, wobei die Volumenströme insbesondere durch die betätigbaren Ventile einstellbar sind. Der Zuführkanal weist außerdem insbesondere einen Anschlussstutzen auf, der von dem Feuchtigkeitstauschmodul vorsteht, oder in dieses hineinragt, um einen Anschluss zu einer Quelle oder Fördereinrichtung für den zweiten Gasstrom bereitzustellen.

Das Brennstoffzellensystem mit den Merkmalen des Anspruchs 8 zeichnet sich durch das erfindungsgemäße Feuchtigkeitsmodul aus. Dabei kann das Brennstoffzellensystem ein oder mehrere Feuchtigkeitsaustauschmodule aufweisen. Es ergeben sich dabei die bereits genannten Vorteile.

Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erläutert werden. Dazu zeigen
- Figur 1: ein Brennstoffzellensystem für ein Kraftfahrzeug in einer vereinfachten Darstellung,
- Figur 2: ein Feuchtigkeitsmodul des Brennstoffzellensystems in einer perspektivischen Darstellung und
- Figur 3: das Feuchtigkeitstauschmodul in einer Längsschnittdarstellung.

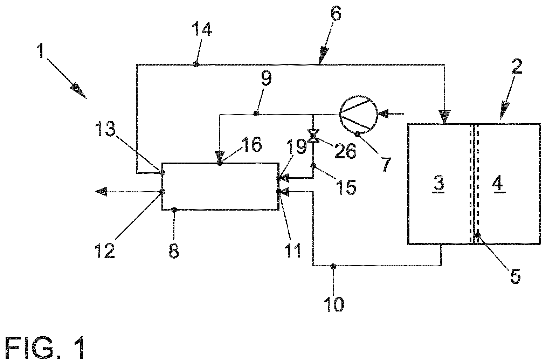

Figur 1 zeigt in einer vereinfachten Darstellung ein Brennstoffzellensystem 1 mit einer Brennstoffzelle 2, die einen Kathodenraum 3 und einen Anodenraum 4 aufweist, die durch einen Separator in Form einer Protonen leitenden Membran 5 voneinander getrennt sind. Um die Funktionsfähigkeit und Leistung der Membran 5 dauerhaft aufrecht zu erhalten, ist es von Vorteil, diese aktiv zu befeuchten.

Hierzu ist ein Befeuchtungssystem 6 vorhanden, das dem Kathodenraum 3 befeuchtete Frischluft zuführt. Dazu weist das Befeuchtungssystem 6 eine Fördereinrichtung 7, beispielsweise in der Form eines Kompressors oder Verdichters auf, die Frischluft ansaugt und einem Feuchtigkeitstauschmodul 8 durch einen Einlasskanal 9 zuführt. Außerdem wird dem Feuchtigkeitstauschmodul 8 durch einen Abgaskanal 10 von der Brennstoffzelle 2 im Betrieb entstandenes Abgas durch eine erste Einlassöffnung 11 zugeführt. Das die Brennstoffzelle 2 verlassende Abgas weist eine hohe Feuchtigkeit auf und das Feuchtigkeitstauschmodul 8 ist dazu ausgebildet, die von dem Abgas mit transportierte Feuchtigkeit an den Frischluftstrom abzugeben, sodass einerseits durch eine erste Auslassöffnung 12 entfeuchtetes Abgas das Feuchtigkeitstauschmodul verlässt, und durch eine zweite Auslassöffnung 13 ein befeuchteter Frischluftstrom, der dann durch einen Auslasskanal 14 dem Kathodenraum 3 der Brennstoffzelle 2 zugeführt wird. Vorteilhafterweise weist das Brennstoffzellensystem 1 mehrere der Brennstoffzellen 2 auf, die auf diese Art und Weise durch einen und/oder mehrere Feuchtigkeitstauschmodule 8 mit befeuchteter Frischluft versorgt werden.

Für den Austausch der Feuchtigkeit sorgt in dem Feuchtigkeitstauschmodul 8 eine Hohlfasermembran 18, entlang welcher der Abgasstrom geführt wird. Die Hohlfasermembran18 ist von dem Frischluftstrom aus dem Einlasskanal 9, der durch eine Einlassöffnung 16 in das Feuchtigkeitstauschmodul 8 mündet, durchströmbar. Dazu ist die Einlassöffnung 16 derart an dem Feuchtigkeitstauschmodul 8 ausgebildet, dass der von dem Kompressor 7 zur Verfügung gestellte Frischluftstrom den Abgasstrom zumindest abschnittsweise kreuzt, sodass die Frischluft die Feuchtigkeit des Abgases aufnimmt und durch die Hohlfasermembran hindurch transportiert, wobei die Hohlfasermembran ansonsten verhindert, dass Abgas in den Frischluftweg gelangt.

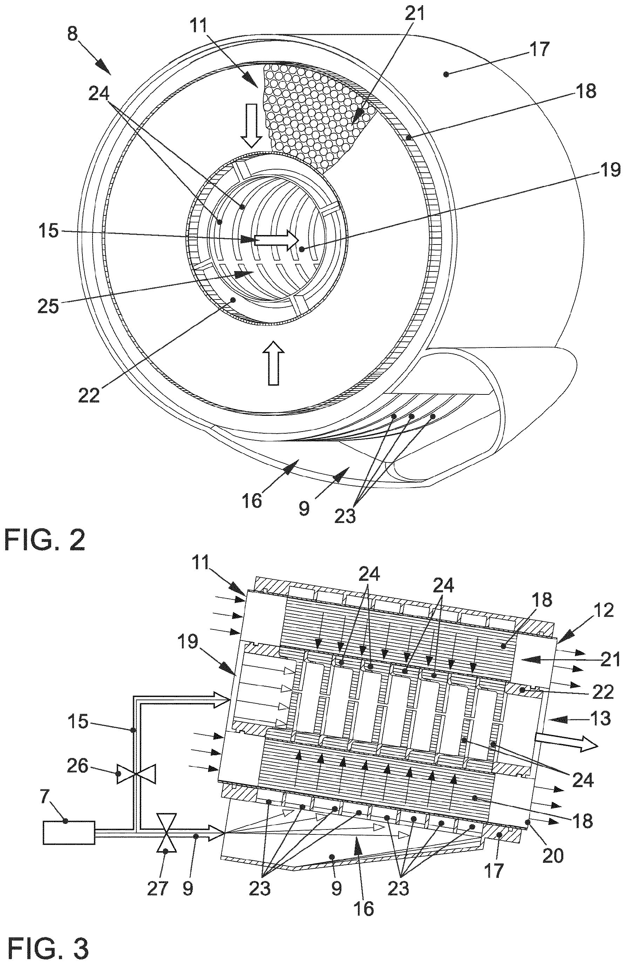

Mit Bezug auf Figuren 2 und 3 soll das Feuchtigkeitstauschmodul 8 näher erläutert werden. Figur 2 zeigt dazu das Feuchtigkeitstauschmodul 8 in einer perspektivischen Darstellung. Das Feuchtigkeitstauschmodul 8 weist ein zylinderförmiges Gehäuse 17 auf, in welchem koaxial zu und in dem Gehäuse 17 eine Hohlfasermembran 18 angeordnet sind. Die Hohlfasermembran 18 weist einen ringförmigen, insbesondere kreisringförmigen Querschnitt auf, der einen axialen Strömungskanal 21 für das Abgas bildet, der von der Einlassöffnung 11 zu der Auslassöffnung 12 führt. Zur besseren Übersicht sind in Figur 2 einzelne Hohlfasern der Hohlfasermembran 18 nur in einem begrenzten Segment gezeichnet. Tatsächlich ist jedoch der gesamte Querschnitt der Hohlfasermembran 18 mit Hohlfasern ausgefüllt, die sich parallel zueinander axial erstrecken. Optional ist die Auslassöffnung 12 durch eine scheibenförmige Membran 20 überdeckt, die insbesondere als Wasserabscheider ausgebildet ist, welcher verbliebenes Wasser aus dem Abgasstrom einerseits und in den Hohlfasermembran 18 gesammeltes Wasser andererseits abscheidet und gezielt abführt. Alternativ wird der Abgasstrom nach dem Austreten aus der Auslassöffnung 12 bevorzugt einem Wasserabscheider zugeführt, der die Restfeuchtigkeit entfernt und beispielsweise zum nachträglichen Befeuchten des Frischluftstroms verfügbar macht. Die Hohlfasermembran 18 liegt an der Außenseite eines Hohlzylinders 22 an, der koaxial zu dem zylinderförmigen Gehäuse 17 in diesem angeordnet ist. Das Gehäuse 17 weist die zuvor genannte Einlassöffnung 16 in seiner Mantelwand auf.

Figur 3 zeigt in einer Längsschnittdarstellung das Feuchtigkeitstauschmodul 8, wobei hier insbesondere die Einlassöffnung 16 an der Mantelwand des Gehäuses 17 gut zu erkennen ist. Dabei zeigt sich, dass die Einlassöffnung 16 mehrere Teilöffnungen 23 aufweist, die in axialer Erstreckung des Gehäuses 17 gesehen hintereinanderliegend ausgebildet sind und sich über die Längserstreckung der Hohlfasermembranen 18 erstrecken. Der Einlassöffnung 16 ist der Einlasskanal 9 zugeordnet, der insbesondere derart ausgebildet ist, dass der Frischluftstrom gleichmäßig auf die Teilöffnungen 23 verteilt wird und dadurch gleichmäßig die Hohlfasermembran 18 an ihrer Außenseite beaufschlagt. Die Pfeile der Figur 3 zeigen die Strömungsrichtung der Gasströme. Die Teilöffnungen 23 sind derart ausgebildet, dass sie den jeweiligen Luftstrom radial in das Gehäuse 17 hinein lenken, sodass die Hohlfasermembran 18 radial von dem Frischluftstrom durchströmt wird. Damit kreuzt der Frischluftstrom in dem Strömungskanal 21 den Abgasstrom. Bevorzugt erstrecken sich die Einlassöffnungen oder Teilöffnungen 23 über den gesamten Umfang des Gehäuses 27 beziehungsweise der Hohlfasermembran 18, sodass diese entlang ihres Umfangs zumindest im Wesentlichen durchgehend mit dem Frischluftstrom beaufschlagt wird beziehungsweise beaufschlagbar ist, um eine vorteilhafte Kreuzung des Luftstroms mit dem Abgasstrom in dem Strömungskanal 21 zu erreichen und dadurch einen besonders hohen Feuchtigkeitsabtransport durch die Frischluft zu gewährleisten.

Der Hohlzylinder 22 weist mehrere Durchgangsöffnungen 24 in seiner Mantelfläche auf, die über die Länge des Hohlzylinders 22 verteilt angeordnet sind. Der Frischluftstrom, der radial in den Strömungskanal 21 beziehungsweise in die Hohlfasermembran 18 einströmt, beaufschlagt die Hohlfasermembran 18 , durchströmt diese und gelangt durch die Durchgangsöffnungen 24 in den Innenraum 25 des Hohlzylinders 22. Dieser Innenraum 25 bildet den zuvor bereits genannten Bypasskanal 15. Wie in Figuren 2 und 3 ersichtlich, ist der Bypasskanal 15 beziehungsweise der Innenraum 25 an den Stirnenden des Hohlzylinders 22 offen ausgebildet, sodass der Frischluftstrom durch eine Einlassöffnung 19 axial in den Bypasskanal 15 das Feuchtigkeitstauschmoduls 8 ein und durch die am anderen Ende des Hohlzylinders 22 ausgebildete Auslassöffnung 13 axial ausströmen kann. Die durch den Bypasskanal 15 strömende beziehungsweise in den Hohlzylinder 22 gelangende Frischluft vermischt sich dort mit dem Luftstrom, der zuvor die Hohlfasermembran 18 durchströmt und Feuchtigkeit aufgenommen hat. Durch die Auslassöffnung 13 gelangen beide beziehungsweise die vermischten Luftströme aus dem Feuchtigkeitstauscher 8 zu der Brennstoffzelle 2.

Das Feuchtigkeitstauschmodul 8 hat den Vorteil, dass zum einen eine vorteilhafte Befeuchtung der Frischluft und damit der Membran 5 gewährleistet ist, und dass zum anderen eine Druckfestigkeit erreicht wird, indem bei kritischen Strömungsdrücken der Frischluftstrom durch den Bypasskanal 15 ausweichen beziehungsweise durch den Hohlzylinder 22 geführt werden kann. Insbesondere ist dem Bypasskanal 15 ein betätigbares Ventil 26 zugeordnet, mittels dessen der Volumenstrom des Bypasskanals 15 einstellbar ist. Alternativ oder zusätzlich ist dem Einlasskanal 9 ebenfalls ein betätigbares Ventil 27 zugeordnet, um dessen Volumenstrom regulieren beziehungsweise steuern zu können. Bei Bedarf kann somit der Frischluftstrom gezielt in dem Bypasskanal 15 geführt und dadurch ein an den Hohlfasermembranen 18 entstehender Luftdruck reduziert werden, um beispielsweise eine Überlastung des Feuchtigkeitstauschmoduls 8 zu vermeiden.

Außerdem erlaubt der Bypasskanal 15 einen sicheren Abtransport beziehungsweise eine Vorzugsströmungsrichtung des das Feuchtigkeitsmodul 8 verlassenden Frischluftstroms. Der mit Feuchtigkeit beladene Frischluftstrom, der radial in den Hohlzylinder eindringt, wird durch den axial eindringenden Frischluftstrom durch den Bypasskanal 15 in Richtung der Auslassöffnung 13 transportiert. Dies wird bevorzugt dadurch unterstützt, dass die Durchgangsöffnungen 24 in dem Hohlzylinder 24 Luftleitelemente aufweisen, wie in Figur 3 ersichtlich, welche den radial eindringenden Luftstrom in Richtung der Auslassöffnung 13 lenken. Damit ist die Strömungsrichtung auch dann gewährleistet, wenn der Bypasskanal 15 durch das Ventil 26 deaktiviert beziehungsweise verschlossen ist.

Während gemäß dem vorliegenden Ausführungsbeispiel der Strömungskanal 21 und der Bypasskanal 15 in gleicher Richtung, also parallel zueinander, durchströmt werden, ist gemäß einem alternativen Ausführungsbeispiel, hier nicht gezeigt, vorgesehen, dass der Strömungskanal 21 und der Bypasskanal 15 in entgegengesetzter Richtungen durchströmt werden, sodass eine Gegenströmung realisiert ist.

### Bezugszeichenliste

- 1: Brennstoffzellensystem
- 2: Brennstoffzelle
- 3: Kathodenraum
- 4: Anodenraum
- 5: Membran
- 6: Befeuchtungssystem
- 7: Fördereinrichtung
- 8: Feuchtigkeitstauschmodul
- 9: Einlasskanal
- 10: Abgaskanal
- 11: Einlassöffnung
- 12: Auslassöffnung
- 13: Auslassöffnung
- 14: Auslasskanal
- 15: Bypasskanal
- 16: Einlassöffnung
- 17: Gehäuse
- 18: Hohlfasermembran
- 19: Einlassöffnung
- 20: Membran
- 21: Strömungskanal
- 22: Hohlzylinder
- 23: Teilöffnungen
- 24: Durchgangsöffnungen
- 25: Innenraum
- 26: Ventil
- 27: Ventil

## Patentansprüche

1. Feuchtigkeitstauschmodul (8) für ein Brennstoffzellensystem (1), mit einem Gehäuse (17), das zumindest eine erste Einlassöffnung (11) und eine erste Auslassöffnung (12) für einen ersten Gasstrom, insbesondere Abgasstrom des Brennstoffzellensystems (1), und zumindest eine zweite Einlassöffnung (16) und eine zweite Auslassöffnung (13) für einen zweiten Gasstrom, insbesondere Frischluft, aufweist, wobei in dem Gehäuse (17) eine zylinderförmige Hohlfasermembran (18) angeordnet ist, welcher die erste Einlassöffnung (11) und die zweite Auslassöffnung (13) derart zugeordnet sind, dass die Hohlfasermembran (18) von dem ersten Gasstrom axial durchströmbar ist, und wobei die zweite Einlassöffnung (16) und die zweite Auslassöffnung (13) derart angeordnet sind, dass der zweite Gasstrom den ersten Gasstrom radial kreuzt, **dadurch gekennzeichnet, dass** koaxial zu und innerhalb der Hohlfasermembran (18) ein Bypasskanal (15) für den zweiten Gasstrom verläuft, sodass auch der den ersten Gasstrom radial kreuzende zweite Gasstrom in den Bypasskanal (15) gelangt, und dass die Hohlfasermembran (18) von einem Hohlzylinder (22) getragen ist, der mehrere Durchgangsöffnungen (24) in seiner Mantelfläche aufweist, und der den Bypasskanal (15) zumindest abschnittsweise bildet.

2. Feuchtigkeitstauschmodul nach Anspruch 1, **dadurch gekennzeichnet, dass** der Bypasskanal (15) eine dritte Einlassöffnung (19) für den zweiten Gasstrom und die zweite Auslassöffnung (13) an jeweils einem seiner axialen Stirnenden bildet.

3. Feuchtigkeitstauschmodul nach einem der vorhergehenden Ansprüche, **dadurch gekennzeichnet, dass** sich die zweite Einlassöffnung (16) zumindest im Wesentlichen über die axiale Länge der Hohlfasermembran (18) erstreckt.

4. Feuchtigkeitstauschmodul nach einem der vorhergehenden Ansprüche, **dadurch gekennzeichnet, dass** der zweiten Einlassöffnung (16) ein Einlasskanal (9) zugeordnet ist, der sich zumindest abschnittsweise axial erstreckt.

5. Feuchtigkeitstauschmodul nach einem der vorhergehenden Ansprüche, **dadurch gekennzeichnet, dass** über den Umfang der Hohlfasermembran (18) verteilt mehrere zweite Einlassöffnungen (16) angeordnet sind.

6. Feuchtigkeitstauschmodul nach einem der vorhergehenden Ansprüche, **dadurch gekennzeichnet, dass** dem Bypasskanal (15) und/oder dem Einlasskanal (9) jeweils ein betätigbares Ventil (26,27) zum Einstellen eines Volumenstroms des ersten Gasstroms und/oder des zweiten Gasstroms zugeordnet ist.

7. Feuchtigkeitstauschmodul nach einem der vorhergehenden Ansprüche, **dadurch gekennzeichnet, dass** von dem Einlasskanal (9) der Bypasskanal (15) abzweigt.

8. Brennstoffzellensystem (1) für ein Kraftfahrzeug, mit einer oder mehreren Brennstoffzellen (2) und mit einem Befeuchtungssystem (6) für eine Membran (5) der jeweiligen Brennstoffzelle (2), wobei das Befeuchtungssystem (6) eine Feuchtigkeitstauschmodul (8) aufweist, durch welches als erster Gasstrom ein Abgas des Brennstoffzellensystems (1) und als zweiter Gasstrom, der den ersten Gasstrom kreuzt, Frischluft geführt werden, um die Frischluft durch das Abgas zu befeuchten und anschließend der jeweiligen Membran (5) zuzuführen, **gekennzeichnet durch** die Ausbildung des Feuchtigkeitstauschmoduls (8) nach einem oder mehreren der Ansprüche 1 bis 7.

## Claims

1. Moisture exchange module (8) for a fuel cell system (1), comprising a housing (17), which has at least one first inlet opening (11) and one first outlet opening (12) for a first gas flow, in particular an exhaust gas flow of the fuel cell system (1), and at least one second inlet opening (16) and one second outlet opening (13) for a second gas flow, in particular fresh air, a cylindrical hollow fiber membrane (18) being arranged in the housing (17), which hollow fiber membrane is associated with the first inlet opening (11) and the second outlet opening (13) such that the first gas flow can flow axially through the hollow fiber membrane (18), and the second inlet opening (16) and the second outlet opening (13) being arranged in such a way that the second gas flow radially crosses the first gas flow, **characterized in that** a bypass channel (15) for the second gas flow extends coaxially to and within the hollow fiber membrane (18), so that the second gas flow crossing the first gas flow also passes into the bypass channel (15), and **in that** the hollow fiber membrane (18) is supported by a hollow cylinder (22) which has a plurality of passage openings (24) in its lateral surface, and which forms the bypass channel (15) at least in portions.

2. Moisture exchange module according to claim 1, **characterized in that** the bypass channel (15) forms a third inlet opening (19) for the second gas flow and the second outlet opening (13) at each of its axial ends.

3. Moisture exchange module according to either of the preceding claims, **characterized in that** the second inlet opening (16) extends at least substantially over the axial length of the hollow fiber membrane (18).

4. Moisture exchange module according to any of the preceding claims, **characterized in that** an inlet channel (9), which extends axially at least in portions, is associated with the second inlet opening (16).

5. Moisture exchange module according to any of the preceding claims, **characterized in that** a plurality of second inlet openings (16) are arranged distributed over the circumference of the hollow fiber membrane (18).

6. Moisture exchange module according to any of the preceding claims, **characterized in that** an actuatable valve (26, 27) for adjusting a volume flow of the first gas flow and/or of the second gas flow is associated with the bypass channel (15) and/or the inlet channel (9).

7. Moisture exchange module according to any of the preceding claims, **characterized in that** the bypass channel (15) branches off from the inlet channel (9).

8. Fuel cell system (1) for a motor vehicle, comprising one or more fuel cells (2) and comprising a humidification system (6) for a membrane (5) of the relevant fuel cell (2), the humidification system (6) having a moisture exchange module (8) through which an exhaust gas of the fuel cell system (1), as a first gas flow, and fresh air, as a second gas flow which crosses the first gas flow, are guided in order to moisten the fresh air through the exhaust gas and then feed it to the relevant membrane (5), **characterized by** the formation of the moisture exchange module (8) according to one or more of claims 1 to 7.

## Revendications

1. Module d'échange d'humidité (8) pour un système de piles à
combustible (1), comportant un boîtier (17) qui présente au moins une première ouverture d'entrée (11) et une première ouverture de sortie (12) pour un premier flux de gaz, en particulier un flux de gaz d'échappement du système de piles à combustible (1), et au moins une deuxième ouverture d'entrée (16) et une seconde ouverture de sortie (13) pour un second flux de gaz, en particulier de l'air frais, dans lequel une membrane à fibres creuses (18) cylindrique est disposée dans le boîtier (17), à laquelle la première ouverture d'entrée (11) et la seconde ouverture de sortie (13) sont associées, de telle sorte que la membrane à fibres creuses (18) peut être traversée axialement par le premier flux de gaz, et dans lequel la deuxième ouverture d'entrée (16) et la seconde ouverture de sortie (13) sont disposées de telle sorte que le second flux de gaz croise radialement le premier flux de gaz, **caractérisé en ce qu'**un canal de dérivation (15) pour le second flux de gaz s'étend de manière coaxiale par rapport à la membrane à fibres creuses (18) et à l'intérieur de celle-ci, de sorte que le second flux de gaz croisant radialement le premier flux de gaz pénètre également dans le canal de dérivation (15), **et en ce que** la membrane à fibres creuses (18) est portée par un cylindre creux (22) qui présente plusieurs ouvertures de passage (24) dans sa surface d'enveloppe et qui forme le canal de dérivation (15) au moins dans certaines sections.

2. Module d'échange d'humidité selon la revendication 1,
**caractérisé en ce que** le canal de dérivation (15) forme une troisième ouverture d'entrée (19) pour le second flux de gaz et la seconde ouverture de sortie (13) au niveau de chacune de ses extrémités frontales axiales.

3. Module d'échange d'humidité selon l'une des revendications précédentes, **caractérisé en ce que** la deuxième ouverture d'entrée (16) s'étend au moins sensiblement sur la longueur axiale de la membrane à fibres creuses (18).

4. Module d'échange d'humidité selon l'une des revendications précédentes, **caractérisé en ce qu'**un canal d'entrée (9) est associé à la deuxième ouverture d'entrée (16), lequel s'étend axialement au moins dans certaines sections.

5. Module d'échange d'humidité selon l'une des revendications précédentes, **caractérisé en ce que** plusieurs deuxièmes ouvertures d'entrée (16) sont réparties sur la circonférence de la membrane à fibres creuses (18).

6. Module d'échange d'humidité selon l'une des revendications précédentes, **caractérisé en ce que** respectivement une soupape actionnable (26,27) permettant de régler un débit volumétrique du premier flux de gaz et/ou du second flux de gaz est associée au canal de dérivation (15) et/ou au canal d'entrée (9).

7. Module d'échange d'humidité selon l'une des revendications précédentes, **caractérisé en ce que** le canal de dérivation (15) bifurque à partir du canal d'entrée (9).

8. Système de piles à combustible (1) pour un véhicule automobile, comportant une ou plusieurs piles à combustible (2) et comportant un système d'humidification (6) pour une membrane (5) de la pile à combustible (2) respective, dans lequel le système d'humidification (6) présente un module d'échange d'humidité (8) à travers lequel un gaz d'échappement du système de piles à combustible (1) est guidé en tant que premier flux de gaz et de l'air frais est guidé en tant que second flux de gaz croisant le premier flux de gaz, afin d'humidifier l'air frais au moyen du gaz d'échappement, puis de l'acheminer à la membrane (5) respective, **caractérisé par** la réalisation du module d'échange d'humidité (8) selon une ou plusieurs des revendications 1 à 7.
